(19) Europäisches Patentamt
European Patent Office
Office européen des brevets

(11) Veröffentlichungsnummer: **0 248 394**
**A2**

(12) **EUROPÄISCHE PATENTANMELDUNG**

(21) Anmeldenummer: **87107942.2**

(51) Int. Cl.⁴: **H01M 8/10**, H01M 4/90

(22) Anmeldetag: **02.06.87**

(30) Priorität: **04.06.86 DE 3618840**

(43) Veröffentlichungstag der Anmeldung:
**09.12.87 Patentblatt 87/50**

(84) Benannte Vertragsstaaten:
**BE DE FR GB NL**

(71) Anmelder: **BASF Aktiengesellschaft**
**Carl-Bosch-Strasse 38**
**D-6700 Ludwigshafen(DE)**

(72) Erfinder: **Sterzel, Hans-Josef, Dr.**
**Wasgauring 3**
**D-6701 Dannstadt-Schauernheim(DE)**

# (54) Methanol/Luft-Brennstoffzellen.

(57) Methanol/Luft-Brennstoffzellen, aufgebaut aus

A) einer Kathode,

B) einer Anode und

C) einer $CO_2$-permeablen Anionenaustauscher-Membran als Elektrolyt.

EP 0 248 394 A2

Xerox Copy Centre

## Methanol/Luft-Brennstoffzellen

Die Erfindung betrifft Methanol/Luft-Brennstoffzellen, aufgebaut aus

A) einer Kathode,

B) einer Anode und

C) einer $CO_2$-permeablen Anionenaustauscher-Membran als Elektrolyt.

Brennstoffzellen sind Zellen, die kontinuierlich die chemische Energieänderung einer Brennstoff-Oxidationsreaktion in elektrische Energie umwandeln. An der Anode werden Brennstoffmoleküle unter Elektronenabgabe oxidiert, an der Kathode erfolgt die Reduktion des Oxidationsmittels unter Aufnahme von Elektronen. Die an der Anode und der Kathode gebildeten Ionen wandern im Elektrolyten und vereinigen sich dort unter Schließung des Stromkreises zu einem Reaktionsprodukt.

Vom thermodynamischen Wirkungsgrad her stellen solche Brennstoffstellen die günstigste Methode der direkten Umwandlung von Brennstoff in elektrische Energie dar.

Am bekanntesten sind Brennstoffzellen, die mit gasförmigen Brennstoffen, vornehmlich Wasserstoff und mit gasförmigem Oxidationsmittel, vorzugsweise Sauerstoff arbeiten.

Derartige Zellen weisen wegen der gasförmigen Brennstoffe und Oxidationsmittel einige Probleme hinsichtlich der Abdichtung und der Zuführung der Brennstoffe bzw. Oxidationsmittel und deren Lagerung auf. Hinzu kommt, daß bei einer Undichtigkeit der zwischen Wasserstoff-und Sauerstoffseite angebrachten Trennwand das System vollständig ausfällt.

Deshalb wurde versucht, Brennstoffzellen mit flüssigen Brennstoffen und Luftsauerstoff als Oxidationsmittel zu entwickeln.

Als flüssiger Brennstoff wird hierbei Methanol bevorzugt, da dieses bei den Arbeitstemperaturen eine ausreichende elektrochemische Aktivität aufweist, keine spezielle Reinigung erforderlich ist und auch die Lagerung problemlos ist. Außerdem kann Methanol großtechnisch und preisgünstig auf der Basis von Rohöl, Erdgas oder Kohle hergestellt werden.

In solchen Methanol/Luft-Brennstoffzellen treten beim Betrieb einige spezifische Probleme auf.

Ein wesentlicher Nachteil ist die Bildung von Kohlendioxid als Oxidationsprodukt des Methanols an der Anode. Da Kohlendioxid in den üblicherweise verwendeten sauren Elektrolyten wie Schwefelsäure oder Phosphorsäure und auch in den als Festelektrolyt verwendeten Kationenaustauscher-Membranen nicht oder nur in sehr geringem Maß löslich ist, wird an der Anode gasförmiges Kohlendioxid entwickelt. Dies führt zu einer Überspannung an der Anode, was einen negativen Einfluß auf den Wirkungsgrad der Brennstoffzelle hat. Außerdem dringt Kohlendioxid in die Zuführungen und die Lagerbehälter für das Methanol ein.

Nach J. Elektroanal. Chem., 199 (1986), Seiten 311-322 soll dieses Problem durch Abgasen des Kohlendioxids gelöst werden. Das abgetrennte Kohlendioxid ist jedoch mit Methanoldampf gesättigt und darf deshalb nicht ohne weitere Reinigung nach außen abgegeben werden. Eine Abtrennung des Methanols über Absorptionsmittel, durch Ausfrieren oder mit speziell für Kohlendioxid selektiv durchlässigen Membranen ist jedoch derart aufwendig und energieverbrauchend, daß aus wirtschaftlichen Gründen derartige Konstruktionen nicht zufriedenstellen.

Ein weiteres, bisher nur mit sehr aufwendigen Mitteln zu lösendes Problem tritt vor allem in Brennstoffzellen auf, in denen Ionenaustauscher-Membranen als Festelektrolyt eingesetzt werden. Bekanntlich werden diese Membranen feucht eingesetzt und zum ordnungsgemäßen Betrieb ist es erforderlich, daß der Wassergehalt weitgehend konstant gehalten wird.

Während des Betriebs der Brennstoffzellen werden an der Anode Wasserstoff-Ionen ($H^+$-Ionen) und an der Kathode Hydroxyl-Ionen, ($OH^-$-Ionen) gebildet. In der Kationenaustauscher-Membran sind jedoch nur Wasserstoff-Ionen beweglich, d.h. der Ionentransport und der Stromfluß innerhalb der Zelle kann nur von Wasserstoff-Ionen bewerkstelligt werden, die von der Anode durch die als Elektrolyt dienende Membran zur Kathode diffundieren und dort mit den Hydroxyl-Ionen zu Wasser abreagieren. Eine Wanderung von Hydroxyl-Ionen durch die Anionenaustauscher-Membran ist infolge der gleichsinnigen Ladung der Hydroxyl-Ionen und der in der Membran gebundenen Festionen nur in sehr eingeschränktem Maße möglich.

Die durch die Membran diffundierenden Wasserstoff-Ionen nehmen als Hydrathülle bei ihrer Wanderung durchschnittlich pro Wasserstoffion 4 Wassermoleküle mit. Dies hat zur Folge, daß die Membran auf der Anodenseite an Wasser verarmt und mit der Zeit austrocknet, während auf der Kathodenseite ein Überschuß an Wasser vorliegt. Um einen ordnungsgemäßen Betrieb zu gewährleisten, ist in der Membran ein konstanter Wassergehalt erforderlich, der nur durch ein gesteuertes Zumischen von Wasser auf der Anodenseite erreicht werden kann. Dies erfordert ebenfalls aufwendige Zusatzaggregate.

Aufgabe der vorliegenden Erfindung war es daher, eine Methanol/Luft-Brennstoffzelle zu entwickeln, welche die vorstehend genannten Nachteile überwindet und gleichzeitig einfach und kostengünstig herstellbar ist und eine hohe Lebensdauer aufweist.

Diese Aufgabe wird erfindungsgemäß durch die eingangs definierten Methanol/Luft-Brennstoffzellen gelöst.

Bevorzugte Brennstoffzellen dieser Art sind den Unteransprüchen zu entnehmen.

Im folgenden wird die Erfindung anhand der detaillierten Beschreibung und der beigefügten Zeichnung erläutert.

Dabei zeigt Figur 1 den prinzipiellen Aufbau einer Methanol/Luft-Brennstoffzelle gemäß der Erfindung.

Als Kathode A) in den erfindungsgemäßen Brennstoffzellen können die für Methanol/Luft-Brennstoffzellen an sich bekannten und z.B. von A. Winsel, Ullmanns Enzyklopädie der technischen Chemie, 4. Auflage, Band 12, Seite 113 ff. beschriebenen Kathoden eingesetzt werden.

Hohe Stromdichten lassen sich vor allem mit porösen, gasdurchlässigen Elektroden erzielen. Die Gasdurchlässigkeit ist vorteilhaft, da beim Betrieb der Brennstoffzelle Sauerstoff in die Kathode hineindiffundiert und Wasser und Kohlendioxid herausdiffundieren.

Solche Gasdiffusionselektroden werden z.B. von Watanabe et al (J. Electroanal. Chem., 183 (1985), 391-394) beschrieben. Diese Elektroden werden durch Sintern von Ruß zusammen mit Rußteilchen, die mit Katalysator bedeckt sind und gegebenenfalls Polytetrafluorethylen-Teilchen um einen geeigneten Ableiter hergestellt. Die erhaltene Elektrode besteht aus einem porösen Netzwerk, in welchem sich die Katalysatorteilchen unter Ausbildung eines Percolationsnetzwerkes berühren.

Als Percolationsnetzwerk ist dabei zu verstehen, daß eine ständige Verbindung zwischen den Katalysatorteilchen vorhanden ist, d.h. die Katalysatorteilchen sich berühren.

Als Katalysatoren für die Reduktion des Sauerstoffs werden üblicherweise Edelmetalle wie Platin, Silber oder Nickel, um nur einige zu nennen, verwendet.

Kostengünstigere Elektroden, in denen die Verwendung von teuren Edelmetallen vermieden wird, lassen sich aus speziellen Membranen herstellen, wie sie in der EP-A-154 247 beschrieben werden.

Zur Herstellung einer Kathode aus den dort beschriebenen Membranen verwendet man als Ableiter vorzugsweise ein engmaschiges Drahtnetz, insbesondere aus rostfreiem Stahl oder Kupfer. Die Maschenweiten betragen in der Regel 0,02 bis 0,5 mm und die freie Fläche macht mindestens 20 % der Gesamtfläche aus. Dieser Ableiter wird dann mit einem unvernetzten Polymeren, wie es in der EP-A 154 247 beschrieben wird, überzogen.

Diese Polymere enthalten sogenannte Co-(salen)-Gruppen, die kovalent an die Polymerkette gebunden sind.

Unter Co(salen)-Verbindungen werden hier die in der EP-A 154 247 beschriebenen Verbindungen der allgemeinen Formel I verstanden.

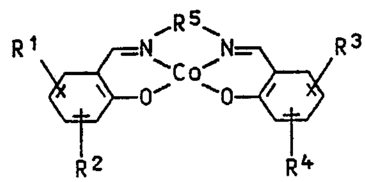

(I).

Dabei können $R^1$, $R^2$, $R^3$ und $R^4$ jeweils Wasserstoff, Methylgruppen, Methoxygruppen, Fluor oder Trifluormethyl darstellen und $R^5$ steht für die zweiwertigen Substituenten $-CH_2-CH_2-$oder einen zweiwertigen Phenylrest.

Besonders bevorzugt werden Verbindungen, in denen die Substituenten $R^1$, $R^2$, $R^3$ und $R^4$ jeweils ein Wasserstoffatom darstellen und $R^5$ für die zweiwertige Ethylengruppe ($-CH_2-CH_2-$) steht.

Verfahren zur Herstellung derartiger Polymerer und diese Polymere enthaltenden Membrane sind in der EP-A 154 247 beschrieben, so daß sich hier nähere Angaben erübrigen.

Derartige Polymere bestehen vorzugsweise aus 10 bis 100 mol-%-Einheiten, die sich von Vinylpyridinen ableiten und gegebenenfalls 0 bis 90 mol-%-Einheiten, die sich von Vinylmonomeren ableiten. Derartige Monomere sind beispielsweise Styrol oder p-Methylstyrol.

Neben den in der EP-A 154 247 beschriebenen Polymeren eignen sich auch die von Bohlen et al (Makromol. Chem. Rapid Commun. 1 (1980) 753-758) beschriebenen Polymeren als katalytischer Bestandteil der Kathoden.

Vorteilhaft läßt sich das Überziehen des gemäß der vorstehend beschriebenen Ausführungsform als Ableiter verwendeten Ableiternetzes dadurch erreichen, daß man die Polymeren in geeigneten polaren Lösungsmitteln, wie Tetrahydrofuran, Dimethylformamid, N-Methylpyrrolidon, Pyridin oder Dimethylsulfon löst und das Ableiternetz in diese Polymerlösung eintaucht. Dabei sollte darauf geachtet werden, daß die Maschen des als Ableiter verwendeten Netzes von der Polymerlösung nicht verschlossen werden.

Anstelle der Polymeren, die die Co(salen)-Einheiten kovalent an der Polymerkette gebunden enthalten, können auch Vinylpolymere eingesetzt werden, in deren Lösung niedermolekulare Verbindungen, die molekularen Sauerstoff aufnehmen und transportieren können und die zur Katalyse bei der Reduktion des Sauerstoffs fähig sind, eingesetzt werden.

Als Vinylpolymere eignen sich z.B. die vorstehend genannten, in der EP-A-154 247 beschriebenen Polymeren.

Der Gewichtsanteil der Co(salen)-Verbindungen in der Lösung der Polymeren, bezogen auf das Gesamtgewicht von Polymer und Co(salen)-Verbindung liegt im allgemeinen im Bereich von 5 bis 80, vorzugsweise von 10 bis 50 Gew.%.

Die Herstellung von Kathoden mit derartigen katalytischen Bestandteilen zur Sauerstoffreduktion kann, wie bei der vorher beschriebenen Ausführungsform, durch Eintauchen des Ableiters in eine Lösung aus Polymer und Co(salen)-Verbindung erzielt werden. Durch Verdampfen des Lösungsmittels läßt sich die Co(salen)-Verbindung in Form eines Percolationsnetzwerkes auskristallisieren.

Die vorstehend beschriebenen polymeren Verbindungen können jedoch nicht nur zum Beschichten von Ableiternetzen, sondern auch zum Beschichten herkömmlicher poröser Elektroden verwendet werden, in denen sie dann ebenfalls den für die Sauerstoffreduktion erforderlichen katalytischen Bestandteil darstellen. Grundsätzlich können hierfür alle porösen Kathoden für Methanol/Luft-Brennstoffzellen, wie sie aus dem Stand der Technik bekannt sind, verwendet werden.

Vorzugsweise werden Kathoden auf der Basis von wasserbenetzbarem Ruß und Polytetrafluorethylenteilchen zur Beschichtung eingesetzt.

Zur Herstellung solcher beschichteter Elektroden kann folgendermaßen verfahren werden:

Ruß mit hohen spezifischen Oberflächen (beispielsweise im Bereich von 200 bis 500 $m^2/g$) wird durch Oxidation in Luft bei ca. 600°C und nachträgliche Behandlung mit siedender Salpetersäure wasserbenetzbar gemacht. Anschließend wird dieser Ruß mit einer verdünnten Lösung aus Polymerem und Co(salen)-Verbindung getränkt, getrocknet und mit Polytetrafluorethylenpulver gut vermischt und bei 150 bis 200°C um einen entsprechenden Ableiter so verpreßt, daß offene Mikroporen und Kanäle erhalten bleiben.

Als besonders vorteilhaft haben sich poröse Kathoden erwiesen, in denen eine Schicht eines Anionenaustauschers-Polymeren abgeschieden worden ist. Diese Schicht ist im allgemeinen 0,01 bis 1 $\mu m$, vorzugsweise 0,05 bis 0,5 $\mu m$ dick und kann vom Aufbau her, der als Festelektrolyt verwendeten Anionenaustauscher-Membran C) entsprechen oder auch davon verschieden sein.

Entsprechende Anionenaustauscher-Polymeren sind an sich bekannt und in der Literatur beschrieben, so daß sich hier nähere Angaben erübrigen.

Besonders gut lassen sich derartige beschichtete Kathoden herstellen, indem man die poröse Elektrode mit einer Lösung des Grundpolymeren tränkt, danach das Lösungsmittel entfernt und am Schluß eine verdünnte Lösung der Komponente, die die ionischen Gruppen bildet, zugibt.

Beispielsweise eignen sich als Grundpolymere Copolymere von Vinylbenzylchlorid mit Styrol oder anderen damit copolymerisierbaren Monomeren wie Ethylenglykolmethacrylat oder Vinylpyridinen oder auch Polyvinylchlorid.

Zur Beschichtung kann man die poröse Elektrode mit einer Lösung dieser Polymeren, beispielsweise in Tetrahydrofuran, Dimethylformamid, Dichlormethan oder Methylethylketon tränken und anschließend das Lösungsmittel verdampfen. Zur Vernetzung und Ausbildung der ionischen Gruppen kann man dann eine verdünnte Lösung eines Polyamins, beispielsweise Diethylentriamin oder Tetraethylenpentamin zugeben und zur Vernetzung und Ausbildung der ionischen Gruppen am Stickstoff (Quaternisierung) 20 bis 50 Stunden auf Temperaturen von 20 bis 120°C, insbesondere von 30 bis 60°C erhitzt werden.

Die Beschichtung mit dem Anionenaustauscher-Polymeren kann direkt im Anschluß an die bereits beschriebene Beschichtung der Elektroden mit den katalytisch wirksamen Polymeren erfolgen, indem man der Lösung der katalytischen Bestandteile das Grundpolymere des Anionenaustauscher-Polymeren zugibt und nach Sintern der Elektrode die Vernetzung und Ausbildung der ionischen Gruppen mit Hilfe des Polyamins durchführt.

In einer anderen Ausführung wird anstatt von Lösungen des Anionenaustauscher-Polymeren von entsprechenden Dispersionen ausgegangen. So lassen sich mit Hilfe der Emulsionspolymerisation beispielsweise wäßrige Dispersionen aus Copolymeren des Vinylbenzylchlorids herstellen und durch Umsetzung mit Aminen oder Polyaminen quaternisieren. Die Herstellung von wäßrigen Dispersionen von Anionenaustauscher-Polymeren ist beispielsweise in der US-PS 4,116,889 beschrieben.

Indem man eine derartige Dispersion eines Anionentaustauscher-Polymeren auf die der Luft abgewandten Seite der Kathode einwirken läßt, erhält man ebenfalls eine Ausbildung der Anionentaustauscher-Polymeren in der der Membran zugewandten Seite der Kathode.

Durch die Beschichtung der porösen Kathode mit den Anionenaustauscher-Polymeren wird eine besonders gute Ankopplung der Kathode an die als Festelektrolyt verwendete Anionenaustauscher-Membran erhalten und somit die Übergangswiderstände, Diffusionswiderstände und damit auch Überspannungen reduziert, was sich positiv auf den Gesamtwirkungsgrad auswirkt.

Als Anode B) können ebenfalls die aus dem Stand der Technik an sich bekannten und in der Literatur beschriebenen Anoden für Methanol/Luft-Brennstoffzellen eingesetzt werden. Derzeit sind noch keine Elektroden erhältlich, in denen auf Edelmetalle als Katalysator zur Oxidation des Wasserstoffs verzichtet werden kann.

Als Katalysator eignen sich z.B. reines Platin oder Mischkatalysatoren auf Basis Platin/Ruthenium oder Platin/Zinn, die gegenüber reinen Platinkatalysatoren eine höhere Aktivität aufweisen und zu niedrigeren Überspannungen führen.

Verfahren zur Herstellung solcher Anoden sind an sich bekannt und in der Literatur beschrieben (beispielsweise in J. Electroanal. Chem. 179 (1984), 303 oder l.c. 199 (1986), 311.

Anoden mit besonders hoher Aktivität erhält man, wenn man Ruß mit hohen spezifischen Oberflächen im Bereich von 100 bis 400 $m^2/g$ als Träger für den Katalysator verwendet.

Eine Anode mit einem Mischkatalysator auf Basis Platin/Ruthenium erhält man z.B. nach dem in J. Electroanal. Chem. 179 (1984), 303-306 beschriebenen Verfahren, in dem man Ruß mit einer Lösung mit $RuCl_3$ in Isopropanol/Wasser behandelt, anschließend auf 120°C erhitzt und zur Abscheidung des Rutheniums bei 200°C eine Reduktion mit Wasserstoff durchführt. Anschließend wiederholt man diese Behandlung mit einer Lösung aus Hexachloroplatinwasserstoffsäure ($H_2PtCl_6$) und scheidet so das Platin ab. Anschließend kann der mit Katalysator aktivierte Ruß mit weiterem Ruß und einer Polytetrafluorethylendispersion gemischt werden.

Besonders bevorzugt werden Polytetrafluorethylenteilchen eingesetzt, die einen mittleren Durchmesser $d_{50}$ von 0,05 bis 0,8 µm, vorzugsweise von 0,1 bis 0,4 µm aufweisen. Unter mittlere Durchmesser $d_{50}$ wird dabei der Durchmesser verstanden, oberhalb und unterhalb dessen jeweils 50 Gew.% der Polytetrafluorethylenteilchen liegen.

Mechanisch besonders belastbare Elektroden erhält man, indem man die vorstehend beschriebenen Pulver in eine Schüttung um den Ableiter bringt und zunächst bei Raumtemperatur und anschließend unter Druck (3-7 $kp/cm^2$) und hohen Temperaturen (300-400°C) sintert. Durch diesen Sinterprozeß erhält man mechanisch belastbare Elektroden, in denen die Katalysatorteilchen miteinander in Berührung stehen und so ein Percolationsnetzwerk ausbilden.

Es ist darauf zu achten, daß die Porosität der Elektrode ausreichend ist, daß Methanol und Wasser gut eindringen können.

Besonders vorteilhafte Anoden werden dadurch erhalten, daß man die porösen Elektroden mit einem Anionenaustauscher-Polymeren beschichtet, um den Stoff und Ladungstransport zu erleichtern. Die Beschichtung kann nach den bereits für die Beschichtung der Kathoden beschriebenen Verfahren erfolgen.

Als wesentlichen Bestandteil enthalten die erfindungsgemäßen Methanol/Luft-Brennstoffzellen eine Anionenaustauscher-Membran als Festelektrolyt.

Im Gegensatz zu den nach dem Stand der Technik bekannten Kationenaustauscher-Membranen als Festelektrolyt erfolgt der Stromtransport in den erfindungsgemäßen Methanol/Luft-Brennstoffzellen durch Wanderung der Hydroxyl-Ionen, die an der Kathode gebildet werden, zur Anode. Auch die Hydroxyl-Ionen nehmen bei ihrer Wanderung eine Solvathülle aus Wassermolekülen in den Anodenraum mit. Auf der Kathodenseite wird das Wasser ständig mit dem Luftstrom, der an der Kathode vorbeigeführt wird, entfernt. Dies hat zur Folge, daß von der Anodenseite zur Kathodenseite ein Konzentrationsgradient an Wasser aufgebaut wird, der dadurch ausgeglichen wird, daß Wasser von der Anodenseite zur Kathodenseite wandert. Dadurch wird der Verlust auf der Kathodenseite ausgeglichen und man erhält einen gleichmäßigen Wassergehalt auf Kathoden-und Anodenseite, wodurch zusätzliche Maßnahmen zur Befeuchtung der Membran auf einer Elektrodenseite überflüssig werden.

Die an der Anode gebildeten Wasserstoff-Ionen können nicht weit in die Anionenaustauscher-Membran vordringen und bilden eine Raumladungswolke um die Anode aus.

Das an der Anode bei der Oxidation des Methanols entstandene Kohlendioxid reagiert mit den von der Kathodenseite zudiffundierenden Hydroxyl-Ionen zu Hydrogencarbonat ($HCO_3^-$-Ionen), wodurch die Bildung von gasförmigem Kohlendioxid zurückgedrängt und die damit verbundene Überspannung reduziert wird. Durch Anlegen eines statischen Überdrucks auf das als Brennstoff verwendete Methanol kann die Bildung von gasförmigem Kohlendioxid praktisch vollständig unterdrückt werden.

Die Hydrogencarbonationen wandern aufgrund des Konzentrationsgefälles und des elektrostatischen Felds innerhalb der Anionenaustauscher-Membran von der Anode zur Kathode, wo sie infolge des dort vorliegenden geringen Kohlendioxid-Partialdrucks zu Hydroxyl-Ionen und Kohlendioxid disoziieren.

Das Kohlendioxid wird gasförmig mit dem an der Kathode vorbeigeführten Luftstrom entfernt.

Als Anionenaustauscher-Membranen können grundsätzlich alle kommerziell erhältlichen Membranen eingesetzt werden, deren Fest-Ionengehalt vorzugsweise im Bereich von 0,5 bis 5 Äquivalenten pro kg trockener Membran liegt.

Als Basispolymere für derartige Anionenaustauscher-Membranen eignen sich z.B. Copolymere, die durch Pfropfung von Vinylpyridinen auf Polytetrafluorethylen oder durch Chlormethylierung von mit Divinylbenzol vernetztem Polystyrol und anschließender Quaternierung mit tertiären Aminen erhältlich sind. Auch Copolymere aus Vinylbenzylchlorid und Divinylbenzol sind geeignet. Zur Erzeugung der zum Anionenaustausch befähigten ionischen Gruppen werden diese Polymere mit entsprechenden Monomeren, z.B. mit Trialkylamin oder multifunktionären Aminen umgesetzt. Geeignete multifunktionelle Amine sind z.B. Diethylentriamin oder Tetraethylenpentamin.

Als Trägerpolymer eignen sich auch Polyvinylchloridfolien, die entsprechend durch Umsetzung mit Aminen modifiziert werden.

Besonders bevorzugt werden Anionenaustauscher-Membranen, deren ionogene Gruppen einen Abstand von mindestens 4 C-Atomen von der Hauptkette aufweisen und in denen die Hauptkette aus aromatischen Polymeren aufgebaut ist, die eine Glasübergangstemperatur von mehr als 80°C aufweisen. Derartige Membranen und Verfahren zu ihrer Herstellung sind in der DE-A 34 07 719 ausführlich beschrieben, so daß sich hier nähere Angaben erübrigen.

In einer besonderen Ausführungsform kann auf eine zusätzliche Anionenaustauscher-Membran verzichtet werden, wenn zumindest eine der nach innen gekehrten Elektrodenoberflächen mit einer homogenen Schicht an Anionenaustauscher-Polymeren welche als Elektrolyt fungiert, überzogen ist.

Abschließend sei der schematische Aufbau einer erfindungsgemäßen Methanol/Luft-Brennstoffzelle anhand der beigefügten Figure 1 erläutert.

Eine Anionenaustauscher-Membran 1, die als Festelektrolyt eingesetzt wird, eine Anode 2 und eine Kathode 3 werden direkt aneinander gepreßt. Die Anode und die Kathode sind jeweils mit einem Ableiter 4 versehen. Über einen externen Verbraucher 5 wird die erzeugte Energie abgenommen. Das als Brennstoff eingesetzte Methanol wird über die Methanolzufuhr 9 und die als Oxidationsmittel verwendete Luft über die Luftzufuhr 10 in den Anoden-bzw. Kathodenraum eingeführt. In der gezeigten Ausführungsform ist auf der Anodenseite ein Stützgitter vorgesehen, das zwischen Anode 2 und der Trennwand 7 zur nächsten Zelle angebracht ist. Abstandhalter 6 sorgen dafür, daß ein entsprechender Kathoden-bzw. Anodenraum zur Verfügung steht. Über einen Auslaß 11 werden die gebildeten Reaktionsprodukte, im vorliegenden Fall Wasser, Kohlendioxid und Stickstoff abgeführt.

Beim Betrieb der Brennstoffzelle werden an der Anode 2 durch Oxidation von Methanol gemäß der Gleichung

$$CH_3OH + H_2O \xrightarrow[-6e]{} CO_2 + 6H^+$$

Kohlendioxid und Wasserstoff-Ionen gebildet.

An der Kathode 3 wird durch Reduktion des in der Luft enthaltenden Sauerstoffs $OH^-$ gemäß

$$1/2\ O_2 \xrightarrow{2e^-} O^{2-}$$

$$O^{2-} + H_2O \longrightarrow 2OH^-$$

gebildet. Die an der Kathode gebildeten $OH^-$-Ionen wandern durch die Anionenaustauscher-Membran zur Anode, wo sie mit den dort gebildeten Wasserstoff-Ionen zu Wasser abreagieren. Gleichzeitig reagiert das an der Anode gebildete Kohlendioxid mit den $OH^-$-Ionen zu Hydrogencarbonat-Ionen ($HCO_3^-$).

Entsprechend dem Konzentrationsgefälle wandern die Hydrogencarbonat-Ionen und das an der Anode gebildete Wasser durch die Anionenaustauscher-Membran zur Kathode. An der Kathode zerfallen die Hydrogencarbonat-Ionen wieder in $OH^-$-Ionen und Kohlendioxid, welches in den an der Kathode vorbeigeführten Luftstrom austritt und so aus der Zelle entfernt wird, ohne daß hierfür besondere Vorrichtungen erforderlich sind. Mit dem an der Kathode vorbeigeführten Luftstrom wird auch das bei der Reaktion gebildete Wasser entfernt.

Aus der vorstehenden Figurenbeschreibung geht hervor, daß sich die erfindungsgemäßen Methanol/Luft-Brennstoffzellen durch einen einfachen Aufbau auszeichnen und gleichzeitig die von den aus dem Stand der Technik bekannten Probleme beim Betrieb nicht auftreten.

Die Zufuhr der Brennstoffe und des Oxidationsmittels kann ganz einfach mit einer Pumpe und einem Gebläse erfolgen.

Beispiel

a) Herstellung eines Anionenaustauscher-Polymeren

Das Anionenaustauscher-Polymere wurde durch Friedel-Crafts-Acylierung von Polyethersulfon mittels 6-Chlorhexancarbonsäurechlorid, nachfolgende katalytische Reduktion der Carbonylgruppe und Quaternisierung mit Trimethylamin wie nachstehend beschrieben hergestellt.

232 g Polyethersulfon, hergestellt durch Polykondensation von 4-Hydroxi-4'-chlordiphenylsulfon, charakterisiert durch eine relative Viskosität von 1,7, gemessen in 1 gew.%iger Lösung in N-Methylpyrrolidon, wurden in 2 l 2-Nitropropan gelöst. In dieser Lösung wurden 85 g 6-Chlorhexancarbonsäurechlorid gelöst. Zu der so erhaltenen Lösung wurde unter Rühren und Kühlen im Temperaturbereich von 15 bis 20°C eine Lösung aus 70 g Aluminiumtrichlorid ($AlCl_3$) in 300 ml 2-Nitropropan innerhalb von ca. 1 Stunde zugegeben und die Mischung danach noch 12 h gerührt. Danach wurde die Reaktionslösung in eine 1:1-Mischung aus Methanol und Eiswasser gegeben, und das ausgefallene Polymere wurde mehrmals mit Methanol gewaschen, getrocknet und in Chloroform gelöst. Zur Reduktion der Carbonylgruppe wurden 38 g Lithiumaluminiumhydrid ($LiAlH_4$) in 600 ml Methyl-t-butylether gelöst und zu dieser Lösung langsam eine Lösung von 290 g $AlCl_3$ in Methyl-t-butylether gegeben. Zu dieser Mischung wurde die Lösung des Polymeren in Chloroform gegeben und 3 h bei Raumtemperatur gerührt.

Dann wurde der so erhaltenen Mischung langsam ca. 1 l einer 15 gew.%igen HCl zugesetzt und gerührt. Das in der organischen Phase vorliegende Polymere wurde in Methanol ausgefällt und getrocknet. Die Ausbeute betrug 283 g, der Chlor-Gehalt 1,54 Äquivalente/kg. 250 g des Polymeren wurden in 1,5 l Dimethylformamid gelöst und unter Rühren bei Raumtemperatur ca. 150 g Trimethylamin eingeleitet. Nach 12 h Rühren wurde das überschüssige Trimethylamin unter Temperaturerhöhung auf 70°C abdestilliert. Die erhaltene Lösung des Anionenaustauscher-Polymeren in Dimethylformamid wurde wie unten angeführt eingesetzt. Sie enthielt 1,5 Äquivalente $^{+}N(CH_3)_3$-Ionen pro kg festem Polymeren.

b) Herstellung des polymeren Katalysators für die Kathode

2-Hydroxy-5-vinylbenzaldehyd wurde nach dem Verfahren von Wulff et al (Makromolekulare Chemie, 179, 1979, Seite 2647) durch Chlormethylierung von Salicylaldehyd, Umsetzen des 5-Chlormethylsalicylaldehyds mit Triphenylphosphin und Umwandlung des Phosphoniumsalzes zu der gewünschten Verbindung hergestellt.

1. Zu einer Lösung von 74 g (0,5 mol) 2-Hydroxy-5-vinylbenzaldehyd in 750 ml Toluol wurden 73 g (1 mol) tert.-Butylamin gegeben und diese Mischung 2 Stunden under Rückfluß gekocht. Nach zweimaliger Extraktion mit jeweils 500 ml Eiswasser wurde das Toluol abdestilliert. Es wurden 80 g (79 %) 2-Butyliminomethyl-4-vinylphenol als gelbes Öl erhalten.

2. 80 g 2-Butyliminomethyl-4-vinylphenol, 42 g 4-Vinylpyridin und 21 g Styrol wurden in 1 200 ml Ethylbenzol gelöst, die Mischung auf 80°C erwärmt und dann 100 mg 2,2'-Azoisobutyronitril zugegeben und unter Stickstoff 24 h gerührt. Das Polymere wurde durch Ausfällen mit Methanol gewonnen. Durch nochmaliges Auflösen in Dimethylformamid und Ausfällen in Methanol erhielt man 122 g (85 %) eines gelblichen Polymeren.

3. 20 g des so erhaltenen Polymeren wurden in einer Mischung aus 400 ml Wasser, 400 ml Ethanol und 80 ml Schwefelsäure 3 h am Rückfluß gekocht, um das als Schutzgruppe wirkende tert.-Butylamin abzuspalten. Es wurden 16,8 g eines Polymeren (Aldehydcopolymer) zurückgewonnen.

4. 16 g des so erhaltenen copolymeren Aldehyds wurden mit 20 ml Ethylendiamin in 300 ml Toluol 24 h am Rückfluß gekocht. Die gebildete polymere Schiff'sche Base wurde in Methanol gefällt, abfiltriert und im Vakuum getrocknet. Es wurden 18,3 g der polymeren Schiff'schen Base erhalten.

5. 18,0 g der polymeren Schiff'schen Base wurden in 300 ml Toluol gelöst. Nach Zugabe von 10 g Salicylaldehyd wurde die Mischung 24 h unter Rückfluß gekocht. Das ausgefällte gelbe Polymere wurde mit Methanol extrahiert. Es wurden 19,3 g des Polyeren erhalten.

6. Eine Mischung aus 19 g des Polymeren aus Stufe 5 und 14 g Kobalt-(II)-acetat• 4 $H_2O$ wurde in 700 ml sauerstoffreiem Dimethylformamid 24 h auf 80°C erhitzt. Das so erhaltene Koordinationspolymere wurde mit Ethanol unter Stickstoff extrahiert. Die Ausbeute betrug 17,6 g.

c) Herstellung der Kathode

50 Gew.-Teile eines Rußes mit einem mittleren Primärteilchendurchmesser um 50 nm, der durch mehrstündige Oxidation in Luft bei 600°C und Kochen in konzentrierter Salpetersäure wasserbenetzbar gemacht worden war, wurden mit 50 Gew.-Teilen Polytetrafluorethylenpulver (mittlere Korngröße 200 nm) in einer Kolloidmühle gemischt. Als Stromableiter wurde ein vernickeltes, quadratisches Kupferdrahtnetz mit einer Drahtstärke von 0,2 mm, einer Maschenweite von 0,4 mm und 50 mm Kantenlänge benutzt. Die Kanten waren allseitig von einem 0,8 mm starken Kupferrahmen eingefaßt. Die Ruß/PTFE-Mischung wurde in einer Mischung aus je einem Volumenteil Wasser und Methanol aufgeschlämmt und die Aufschlämmung auf das Ableiternetz ausgestrichen. Zur guten Kontaktierung wurde die Aufschlämmung mit einer Walze in das Ableiternetz eingewalzt. Danach wurde das so erhaltene Netz getrocknet und zunächst bei Raumtemperatur, dann bei 360°C unter einem Druck von ca. 50 N/cm$^2$ in einer Preßform eine ca. 0,8 mm starke Elektrode hergestellt. Diese Elektrode wurde mit einer Lösung von 5 g des polymeren Katalysators (wie unter b) beschrieben) in 100 ml Dimethylformamid getränkt und das Dimethylformamid durch Erhitzen auf 150°C entfernt.

Die Elektrode wurde mit Methanol getränkt und danach auf einer Seite mit einer 15 %igen Lösung des Anionenaustauscher-Polymeren (wie unter a) beschrieben) in Dimethylformamid bestrichen.

Das vorherige Tränken mit Methanol diente dazu, die Lösung des Anionenaustauscher-Polymeren zu koagulieren und damit ein völliges Zusetzen der Poren der Elektrode zu verhindern. Nach vorsichtigem Verdunsten der Lösungsmittel wurde eine Kathode erhalten, die einseitig mit Anionenaustauscher-Polymeren beschichtet war, die jedoch auf der Gegenseite offenporig war. Die Stärke der Beschichtung betrug ca. 0,1 mm.

d) Herstellung der Anode

Wie in c) ausgeführt, wurde eine Elektrode aus wasserbenetzbarem Ruß, Polytetrafluorethylen und vernickeltem Kupferableiter durch Sintern in einer Preßform hergestellt. Als Elektrokatalysator wurde ein Mischsystem aus Zinn und einem geringen Anteil an Platin verwendet. Die Elektrode wurde zunächst mit einer 10 gew.%igen Lösung aus Zinn(IV)chlorid in Isopropanol getränkt, bei 120°C getrocknet und dann das Zinn(IV)chlorid durch Wasserstoff bei 200°C in einem Ofen reduziert. Die Zinn-Beladung betrug ca. 15 mg/cm$^2$. Danach wurde die Elektrode mit einer wäßrigen Lösung von Hexachloroplatinwasserstoffsäure ($H_2PtCl_6$) getränkt und daraus das Platin durch Reduktion mit Wasserstoff dargestellt. Die Platin-Beladung betrug 0,3 mg/cm$^2$. Schließlich wurde auf die so erhaltene Anode einseitig eine Schicht des Anionenaustauscher-Polymeren analog (c) aufgebracht, wobei die Stärke der Beschichtung ca. 0,1 mm betrug.

e) Herstellung der Brennstoffzelle und Leistung der Zelle

Anode und Kathode wurden vor dem Zusammenbau der Zelle 24 h in einer mit Wasserdampf gesättigten Atmosphäre gelagert, um das Anionenaustauscher-Polymere zu quellen.

Beim Zusammenbau wurden die mit dem Anionenaustauscher-Polymeren beschichteten Seiten der Elektroden unter Verwendung von Federn und Stützmaterial unter Druck aneinandergebracht. Die Anodenkammer wurde mit Methanol gefüllt, durch den Kathodenraum strömte gefilterte Luft.

Die Leerlaufspannung der Zelle betrug 1,20 V, bei einer Stromentnahme von 1 A/cm$^2$ sank die Spannung auf 0,98 V ab.

**Ansprüche**

1. Methanol/Luft-Brennstoffzellen, aufgebaut aus

A) einer Kathode,

B) einer Anode und

C) einer $CO_2$-permeablen Anionenaustauscher-Membran als Elektrolyt.

2. Methanol/Luft-Brennstoffzellen nach Anspruch 1, dadurch gekennzeichnet, daß Kathode (A) und/oder Anode (B) poröse Gasdiffusionselektroden sind, in denen der Katalysator ein Percolationsnetzwerk innerhalb der Poren bildet.

3. Methanol/Luft-Brennstoffzellen nach den Ansprüchen 1 und 2, dadurch gekennzeichnet, daß Kathode (A) und/oder Anode (B) eine Schicht eines Anionenaustauscherpolymeren enthalten.

4. Methanol/Luft-Brennstoffzellen nach den Ansprüchen 1 bis 3, dadurch gekennzeichnet, daß die Kathode (A) als katalytischen Bestandteil Co(salen)-Verbindungen der Formel I oder ein diese Verbindungen enthaltendes Polymeres enthält:

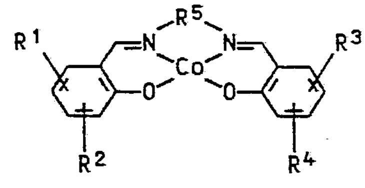

(I).

5. Methanol/Luft-Brennstoffzellen nach den Ansprüchen 1 bis 4, dadurch gekennzeichnet, daß de Anionenaustauscher-Membran (C) aus einem Basispolymeren mit einer Glasübergangstemperatur von mehr als 80°C aufgebaut ist und die ionogenen Gruppen einen Abstand von mindestens 4 C-Atomen von der Hauptkette aufweisen.